# DEMANDE DE BREVET EUROPEEN

(11) **EP 1 192 849 A1**
(43) Date de publication de la demande: **03.04.2002**
(21) Numéro de dépôt: 01440300.0
(22) Date de dépôt: 12.09.2001
(51) Int. Cl.: A01C 5/06, A01B 33/10

(54) **Disque ouvreur pour semoir et semoir utilisant un tel disque**

(30) Priorité: 29.09.2000 FR 0012400
(71) Demandeur: Kuhn-Huard S.A., 44142 Chateaubriant Cedex (FR)
(72) Inventeur: Gentilhomme, Guy, 44110 Louisfert (FR)
(74) Mandataire: Andres, Jean-Claude

(57) **Abrégé**

La présente invention concerne un disque ouvreur (1) pour semoir. D'une manière connue de l'homme de l'art, ledit disque ouvreur (1) comporte des ondulations (4). Ces ondulations (4) permettent au disque (1) de travailler une bande de terre relativement large.

Selon une caractéristique de la présente invention, ledit disque (1) possède avantageusement au moins une encoche (9) sur sa circonférence (3). Ladite(lesdites) encoche(s) (9) a(ont) pour but d'augmenter le pouvoir de pénétration dudit disque (1) dans le sol.

## Description

La présente invention se rapporte au domaine technique général du machinisme agricole. Elle concerne plus particulièrement un disque ouvreur comportant au moins une ondulation.

Un tel disque est connu de l'homme du métier. En effet, le prospectus **KUHN-HUARD Semis Direct** décrit un semoir comportant une première série de disques, appelés disques ouvreurs, destinés à préparer des lignes de semis. Chaque disque ouvreur s'étend suivant un plan respectif sensiblement vertical. De plus, chaque disque ouvreur peut tourner librement sur lui-même autour d'un axe sensiblement horizontal et sensiblement perpendiculaire à une direction d'avance dudit semoir durant le travail. Ce semoir connu comporte également une deuxième série de disques, appelés disques semeurs, destinés à parfaire lesdites lignes de semis et à les ensemencer.

La circonférence de ces disques ouvreurs connus comporte des ondulations, lesdites ondulations passant successivement de part et d'autre d'un plan vertical médian dudit disque. Sur ce semoir connu, l'utilisateur peut avantageusement choisir, selon la nature du terrain à ensemencer, entre un disque ouvreur dit "ondulé" ou un disque ouvreur dit "gaufré". Le disque ondulé comporte un nombre relativement restreint d'ondulations (environ une dizaine) et celles-ci ont une amplitude relativement importante (environ 50 mm). Ce type de disque provoque un bon émiettement de la terre et permet de préparer une ligne de semis relativement large. Pour sa part, le disque gaufré comporte, par rapport au disque ondulé, un nombre plus important d'ondulations, mais d'amplitude plus faible. Ce type de disque convient mieux aux sols caillouteux et très durs où un bon pouvoir de pénétration du disque dans le sol est requis. La ligne de semis est travaillée sur une bande plus étroite.

Le but de la présente invention vise à créer un disque ouvreur alliant les deux avantages décrits ci-dessus, c'est-à-dire un disque pourvu d'une bonne pénétration dans le sol et qui engendre également un émiettement de qualité sur une largeur relativement importante.

A cet effet, il est proposé un disque ouvreur comportant au moins une ondulation, caractérisé par le fait que la circonférence dudit disque comporte au moins une encoche. Ladite(lesdites) encoche(s) a(ont) pour effet de rendre ledit disque plus agressif, donc de favoriser sa pénétration dans le sol. Ladite(lesdites) encoche(s) a(ont) également une action favorable sur l'émiettement de la bande de terre travaillée.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- la **figure 1** représente, en perspective, un disque ouvreur conforme à l'invention,
- la **figure 2** représente une vue en plan du disque ouvreur de la figure 1,
- la **figure 3** représente, vue suivant la flèche I définie sur la figure 2, le disque ouvreur de la figure 1.

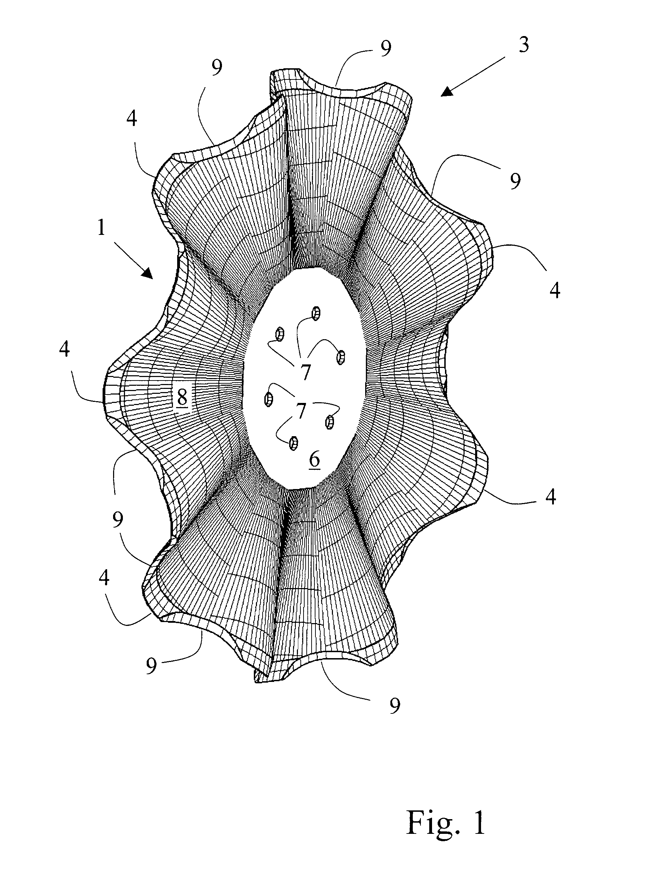

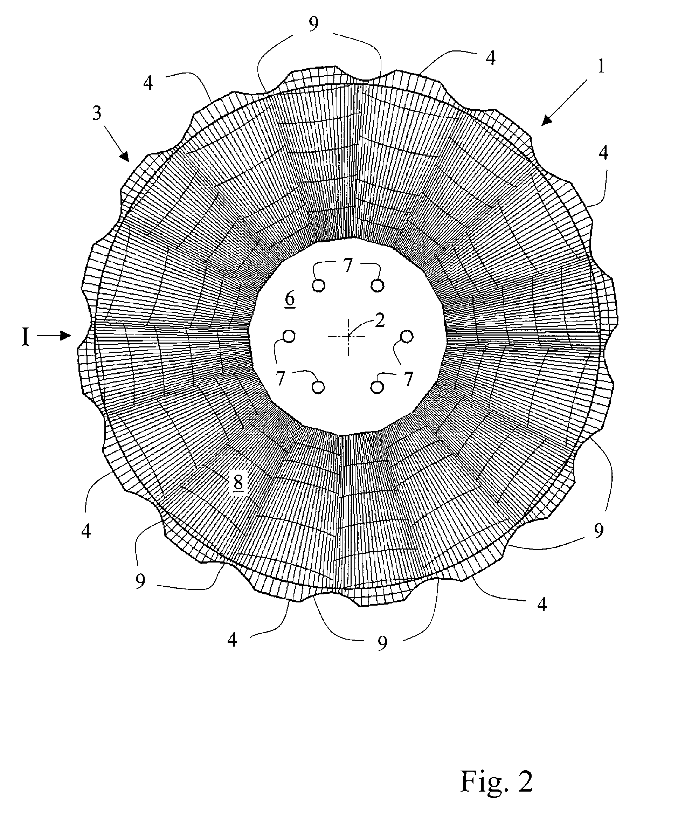

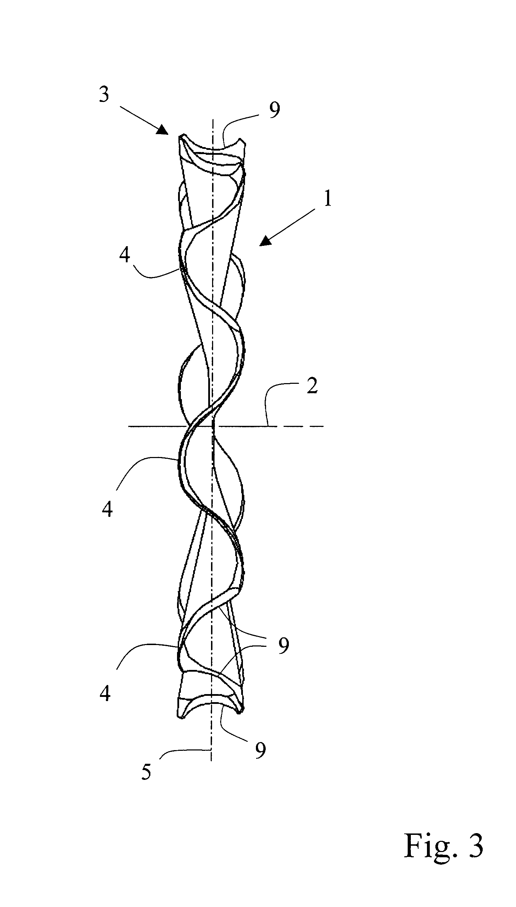

La figure 1 représente un disque ouvreur (1) conforme à la présente invention. Ledit disque (1) est destiné à équiper un semoir (non représenté) et à préparer le sol dans la ligne de semis à ensemencer. Pour ce faire, ledit disque (1) est lié audit semoir au moyen d'une articulation (non représentée) d'axe (2) (visible sur les figures 2 et 3). Lors du travail, ledit disque (1) roule sur le sol en tournant sur lui-même autour dudit axe (2). La circonférence (3) dudit disque (1) pénètre plus ou moins profondément dans le sol et assure ainsi la préparation d'une ligne de semis. D'une manière connue de l'homme de l'art, ladite circonférence (3) dudit disque (1) est avantageusement ondulée. Ces ondulations (4) permettent audit disque (1) de travailler une bande de terre plus large que ne le ferait un disque plan.

Dans l'exemple de réalisation représenté sur les figures, ledit disque (1) comporte huit ondulations (4) et il possède, vue en plan (figure 2), une forme sensiblement circulaire. Lesdites ondulations (4) sont réparties de manière au moins sensiblement uniforme le long de ladite circonférence (3) dudit disque (1). D'une manière préférentielle, ladite circonférence (3) décrit une courbe sensiblement sinusoïdale, ladite courbe passant successivement de part et d'autre d'un plan médian (5) (visible sur la figure 3) dudit disque (1). En contrepartie, ledit disque (1) comporte également une zone centrale (6) sensiblement plane et au moins sensiblement comprise dans ledit plan médian (5). Ladite zone centrale (6), de forme sensiblement circulaire vue en plan, est destinée à lier ledit disque (1) audit semoir. A cet effet, ladite zone centrale (6) comporte avantageusement six trous (7) permettant le passage d'éléments de fixation (non représentés), tels que des vis par exemple. Comme visible, plus particulièrement sur les figures 1 et 2, ledit disque (1) comporte également une zone périphérique (8) qui assure une transition entre ladite zone centrale plane (6) et ladite circonférence sinusoïdale (3). Dans cette zone périphérique de transition (8), lesdites ondulations (4) s'étendent sensiblement radialement.

Selon une caractéristique importante de la présente invention, ladite circonférence (3) dudit disque (1) comporte au moins une encoche (9). Ladite(lesdites) encoche(s) (9) rend(ent) avantageusement ledit disque (1) plus agressif. Ce dernier pourra donc pénétrer plus facilement dans le sol, notamment dans des sols caillouteux et très durs.

Dans l'exemple de réalisation représenté sur les figures, ledit disque (1) comporte seize encoches (9) de sorte que chaque ondulation (4) est associée à deux encoches (9). Lesdites encoches (9) sont avantageusement reparties de manière au moins sensiblement uniforme le long de ladite circonférence (3). Plus précisément encore, lesdites encoches (9) sont disposées, de manière préférentielle, dans des zones de ladite circonférence (3) où lesdites ondulations (4) coupent ledit plan médian (5). De cette sorte, chaque ondulation (4) est associée à une encoche (9) complète et deux demi-encoches(9). Lesdites encoches (9) ont, avantageusement, au moins sensiblement la forme d'un arc de cercle.

Le disque ouvreur (1) qui vient d'être décrit, n'est qu'un exemple de réalisation qui ne saurait en aucun cas limiter le domaine de protection défini par les revendications suivantes.

En effet, on pourrait très bien imaginer un disque (1) possédant une forme non circulaire, par exemple elliptique. On pourrait également très bien imaginer un disque (1) comportant un nombre d'ondulations (4) différent, et/ou un nombre d'encoches (9) différent. Il en va de même pour la forme et l'emplacement desdites encoches (9) sur la circonférence (3) dudit disque (1).

## Revendications

1. Disque ouvreur comportant au moins une ondulation (4), ***caractérisé par le fait que*** la circonférence (3) dudit disque (1) comporte au moins une encoche (9).

2. Disque ouvreur selon la revendication 1, ***caractérisé par le fait que*** ladite circonférence (3) passe successivement de part et d'autre d'un plan médian (5) dudit disque (1).

3. Disque ouvreur selon la revendication 1 ou 2, ***caractérisé par le fait que*** ladite(lesdites) ondulation(s) (4) est(sont) répartie(s) de manière au moins sensiblement uniforme le long de ladite circonférence (3) dudit disque (1).

4. Disque ouvreur selon l'une des revendications 1 à 3, ***caractérisé par le fait que*** ladite(lesdites) encoche(s) (9) est(sont) répartie(s) de manière au moins sensiblement uniforme le long de ladite circonférence (3) dudit disque (1).

5. Disque ouvreur selon l'une des revendications 1 à 4, ***caractérisé par le fait que*** chaque ondulation (4) est associée à deux encoches (9).

6. Disque ouvreur selon la revendication 5, ***caractérisé par le fait que*** chaque ondulation (4) est associée à une encoche (9) complète et deux demi-encoches (9).

7. Disque ouvreur selon l'une des revendications 3 à 6 prise en combinaison avec la revendication 2, ***caractérisé par le fait que*** ladite(lesdites) encoche(s) (9) est(sont) disposée(s) dans une(des) zone(s) de ladite circonférence (3) où ladite(lesdites) ondulation(s) (4) coupe(nt) ledit plan médian (5).

8. Disque ouvreur selon l'une des revendications 1 à 6, ***caractérisé par le fait que*** ladite(lesdites) encoche(s) (9) a(ont) au moins sensiblement la forme d'un arc de cercle.

9. Disque ouvreur selon l'une des revendications 1 à 7, ***caractérisé par le fait* que** ledit disque (1), vu en plan, a une forme au moins sensiblement circulaire.

10. Disque ouvreur selon l'une des revendications 1 à 9, ***caractérisé par le fait que*** ladite(lesdites) ondulation(s) (4) s'étend(ent) sensiblement radialement.

11. Disque ouvreur selon l'une des revendications 1 à 10, ***caractérisé par le fait* que** ledit disque (1) comporte en sus une zone centrale (6) au moins sensiblement plane.

12. Disque ouvreur selon la revendication 11, ***caractérisé par le fait que*** ladite zone centrale (6) présente au moins un trou de fixation (7).

13. Semoir comportant au moins un disque ouvreur (1) selon l'une des revendications 1 à 12.
